# EUROPÄISCHE PATENTSCHRIFT

(11) **EP 2 992 738 B1**
(45) Veröffentlichungstag und Bekanntmachung des Hinweises auf die Patenterteilung: **19.07.2017**
(21) Anmeldenummer: 14731542.8
(22) Anmeldetag: 30.04.2014
(51) Int. Cl.: H05B 33/08

(54) **FEHLERERKENNUNG FÜR LED**
ERROR DETECTION FOR LED
RECONNAISSANCE D'ERREUR POUR DEL

(30) Priorität: 30.04.2013 AT 1522013 U
(43) Veröffentlichungstag der Anmeldung: 09.03.2016
(73) Patentinhaber: Tridonic GmbH & Co. KG, 6851 Dornbirn (AT)
(72) Erfinder: ORTEGA, Joan, A-6850 Dornbirn (AT); KUCERA, Klemens, A-6700 Bludenz (AT); LOCHMANN, Frank, 88147 Esseratsweiler (DE)
(74) Vertreter: Rupp, Christian
(86) Internationale Anmeldenummer: PCT/AT2014/000106
(87) Internationale Veröffentlichungsnummer: WO 2014/176618

(56) Entgegenhaltungen:
- EP-A1- 2 466 992
- WO-A1-2010/046065
- WO-A1-2012/045475
- DE-A1-102006 022 819

## Beschreibung

Die Erfindung betrifft eine Betriebsschaltung mit Leuchtdioden gemäß dem Oberbegriff des Anspruchs 1 sowie ein Verfahren gemäß dem Oberbegriff des Anspruchs 4.

### Technisches Gebiet

Halbleiterlichtquellen wie beispielsweise Leuchtdioden sind während der letzten Jahre für Beleuchtungsanwendungen zunehmend interessant geworden. Der Grund dafür liegt unter anderem darin, dass entscheidende technische Innovationen und große Fortschritte sowohl bei der Helligkeit als auch bei der Lichteffizienz (Lichtleistung pro Watt) dieser Lichtquellen erzielt werden konnten. Nicht zuletzt durch die vergleichsweise lange Lebensdauer konnten sich Leuchtdioden zu einer attraktiven Alternative zu herkömmlichen Lichtquellen wie Glüh- oder Gasentladungslampen entwickeln.

### Stand der Technik

Halbleiterlichtquellen sind aus dem Stand der Technik hinreichend bekannt und werden im Folgenden als LED (light-emitting-diode) abgekürzt. Dieser Begriff soll im Folgenden sowohl Leuchtdioden aus anorganischen Materialien als auch Leuchtdioden aus organischen Materialien umfassen. Es ist bekannt, dass die Lichtabstrahlung von LEDs mit dem Stromfluss durch die LEDs korreliert.

Zur Helligkeitsregelung werden LEDs daher grundsätzlich in einem Modus betrieben, in dem der Stromfluss durch die LED geregelt wird. Das Dokument WO2012/045475 offenbart eine Betriebsschaltung für Leuchtdioden. In der Praxis werden zur Ansteuerung einer Anordnung von einer oder mehrerer LEDs vorzugsweise Schaltregler, beispielsweise Tiefsetzsteller (Step-Down oder Buck Converter) verwendet. Ein solcher Schaltregler ist beispielsweise aus der DE 10 2006 034 371 A1 bekannt. Dabei steuert eine Steuereinheit einen hochfrequent getakteten Schalter (beispielsweise einen Leistungstransistor) an. Im eingeschalteten Zustand des Schalters fließt Strom über die LED Anordnung und eine Spule, die dadurch aufgeladen wird. Die zwischengespeicherte Energie der Spule entlädt sich im ausgeschalteten Zustand des Schalters über die LEDs (Freilaufphase). Der Strom durch die LED Anordnung zeigt einen zickzackförmigen zeitlichen Verlauf: bei eingeschaltetem Schalter zeigt der LED-Strom eine ansteigende Flanke, bei ausgeschaltetem Schalter ergibt sich eine abfallende Flanke. Der zeitliche Mittelwert des LED-stroms stellt den Effektivstrom durch die LEDanordnung dar und ist ein Maß für die Helligkeit der LEDs. Durch entsprechende Taktung des Leistungsschalters kann der mittlere, effektive Strom geregelt werden.
Die Funktion des Betriebsgeräts ist nun, einen gewünschten mittleren Stromfluss durch die LEDs einzustellen und die zeitliche Schwankungsbreite des Stroms, bedingt durch das hochfrequente Ein- und Abschalten des Schalters (typischerweise im Bereich oberhalb von 10 kHz), möglichst gering zu halten.

Eine große Schwankungsbreite des Stroms (Welligkeit oder Rippel) wirkt sich besonders bei LEDs nachteilig aus, da mit Veränderung der Stromamplitude sich das Spektrum des emittierten Lichts verändern kann.

Um das emittierte Lichtspektrum während des Betriebs möglichst konstant zu halten, ist es bekannt, bei LEDs für Helligkeitsregelungen nicht die Stromamplitude zu variieren, sondern ein sogenanntes PWM (pulse-widthmodulation) - Verfahren anzuwenden. Dabei werden den LEDs durch das Betriebsgerät niederfrequente (typischerweise mit einer Frequenz im Bereich von 100-1000 Hz) Pulspakete mit (im zeitlichen Mittel) konstanter Stromamplitude zugeführt. Dem Strom innerhalb eines Pulspakets ist der oben angeführter hochfrequente Rippel überlagert. Die Helligkeit der LEDs kann nun durch die Frequenz der Pulspakete gesteuert werden; die LEDs können beispielsweise gedimmt werden, indem der zeitliche Abstand zwischen den Pulspaketen vergrößert wird.

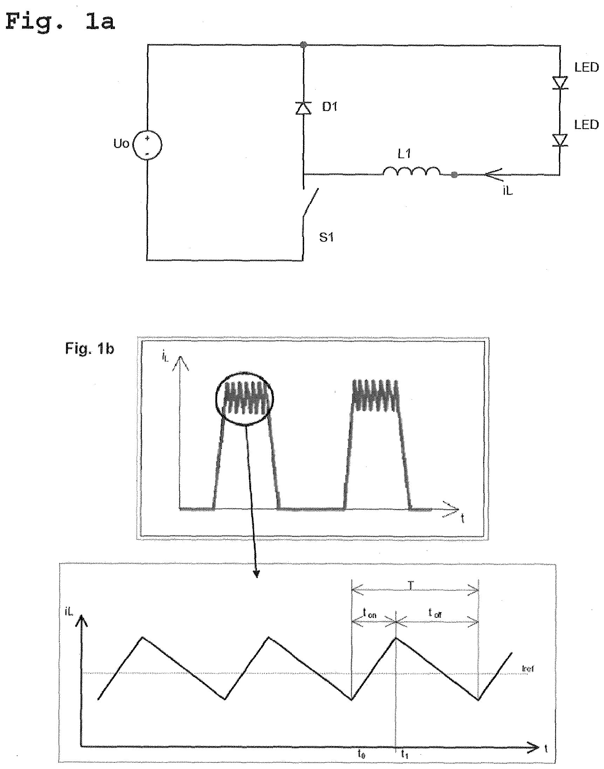

Eine praktische Anforderung an das Betriebsgerät ist, dass es möglichst flexibel und vielseitig eingesetzt werden kann, beispielsweise unabhängig davon, wie viele LEDs als Last tatsächlich angeschlossen sind und betrieben werden sollen. Die Last kann sich zudem während des Betriebs ändern, wenn beispielsweise eine LED ausfällt.
Bei herkömmlichen Technologien werden die LEDs in einem sogenannten 'continuous conduction mode' bzw. nichtlückendem Betrieb betrieben. Dieses Verfahren sei anhand von Figur 1a und Figur 1b näher erläutert (Stand der Technik).

Im in Figur 1a gezeigten Beispiel ist als Grundschaltung ein Tiefsetzsteller (Buck-Converter) für den Betrieb zumindest einer LED (oder mehrerer in Serie geschalteten LEDs) dargestellt, die einen ersten Schalter S1 aufweist. Die Betriebsschaltung wird mit einer Gleichspannung bzw einer gleichgerichteten Wechselspannung U0 versorgt.

Im eingeschalteten Zustand des ersten Schalters S1 (während der Zeitdauer t_on) wird in der Spule L1 Energie aufgebaut, die sich im ausgeschalteten Zustand des ersten Schalters S1 (Zeitdauer t_off) über zumindest eine LED entlädt. Der sich ergebende zeitliche Stromverlauf ist in Figur 1b abgebildet (Stand der Technik). Dabei sind zwei Pulspakte des PWM dargestellt. Der Stromverlauf innerhalb eines Pulspakets ist zudem vergrößert dargestellt. Aus Gründen der Farbkonstanz soll innerhalb eines Pulspakets die Amplitude des Rippels möglichst gering sein. Dies kann durch geeignete Wahl des Einschaltzeitpunkts t0 und Ausschaltzeitpunkts t1 erfolgen. So können diese Zeitpunkte beispielsweise so gewählt werden, dass der ersten Schalter S1 eingeschaltet wird, wenn der Strom einen bestimmten minimalen Referenzwert unterschreitet und der Schalter ausgeschaltet wird, wenn der Strom einen maximalen Referenzwert überschreitet. Dieses Verfahren hat aber mehrere Nachteile: Zum einen, um einen möglichst geringen Rippel zu erzielen, ist eine rasche Abfolge von Ein- und Auschaltvorgängen notwendig. Die Steigung (positive bzw. negative Flanke) des Stroms ist nämlich nicht vom Betriebsgerät steuerbar und als gegeben zu betrachten, da sie u.a. durch die Induktivität der Spule L1 und durch die Leistungsaufnahme der LEDs bestimmt ist.

Um die Welligkeit (Rippel) zu reduzieren, müssten innerhalb eines Zeitabschnitts mehr Schaltvorgänge stattfinden, was naturgemäß Schaltverluste mit sich zieht. Zum anderen sind diese Schaltverluste im continuous conduction mode besonders hoch.

Ein realer Halbleiterschalter schaltet zwar sehr rasch, er schaltet aber nicht unendlich schnell. Die beim Schaltvorgang dissipierte Energie ist umso größer, je länger der Schaltvorgang dauert und je höher die Leistung ist, die während dem Schaltvorgang am Schalter anliegt. Im nichtlückenden Betrieb sind nun die Schaltverluste besonders hoch, da die Schaltvorgänge stattfinden, während hohe Ströme anliegen.

### Darstellung der Erfindung

Es ist die Aufgabe der vorliegenden Erfindung, eine gegenüber dem Stand der Technik verbesserte Betriebsschaltung für wenigstens eine LED und ein Verfahren zum Betrieb wenigstens einer LED bereitzustellen, welche auf einfache Art und Weise die Konstanthaltung des Stroms und somit der LED-leistung ermöglicht.

Diese Aufgabe wird erfindungsgemäß durch die Merkmale der unabhängigen Ansprüche gelöst. Die abhängigen Ansprüche bilden den zentralen Gedanken der Erfindung in besonders vorteilhafter Weise weiter.

Gemäß einem ersten Aspekt der Erfindung wird der Betriebsschaltung für wenigstens eine LED eine Gleichspannung oder gleichgerichtete Wechselspannung zugeführt. Eine Versorgungsspannung für wenigstens eine LED wird mittels einer Spule und einem durch eine Steuereinheit getakteten ersten Schalter bereitstellt, wobei bei eingeschaltetem erstem Schalter in der Spule eine Energie zwischengespeichert wird, die sich bei ausgeschaltetem erstem Schalter über eine Diode und über der wenigstens einen LED entlädt.

Die Steuereinheit kann den Strom durch die Spule während der Einschaltzeit des ersten Schalters überwachen, und sofern ein definierter erster Referenzstrom überschritten wird, den Schalter öffnen, wobei in weiterer Folge die Steuereinheit eine Erkennung des Erreichens der Entmagnetisierung der Spule durchführt, wobei bei Erkennung des Erreichens der Entmagnetisierung der Spule der Schalter wieder geschlossen wird,
und wobei bei Überschreiten eines definierten zweiten Referenzstromes durch den Schalter während der Einschaltzeit des ersten Schalters den Schalter öffnet und nachfolgend für eine vorgegebene Pausenzeitspanne die Erkennung des Erreichens der Entmagnetisierung der Spule deaktiviert wird (es wird also diese Erkennung zeitweise nicht durchgeführt).

Die Steuereinheit überwacht den Strom durch die Spule während der Einschaltzeit des ersten Schalters, und bei wiederholtem Überschreiten der Schwelle für den definierten zweiten Referenzstrom wird einen Fehler erkannt. Dies kann zu einer Abschaltung der Betriebsschaltung führen.

In einer bevorzugten Ausführungsform der Erfindung weist die Betriebsschaltung eine erste Sensoreinheit, die ein vom Stromfluss durch den ersten Schalter abhängendes erstes Sensorsignal erzeugt, und/oder eine zweite Sensoreinheit auf, die das Erreichen der Entmagnetisierung der Spule detektiert und ein Sensorsignal erzeugt.
Die Sensorsignale werden an die Steuereinheit zugeführt und bearbeitet.

Erfindungsgemäß verwendet die Steuereinheit ein Signal der ersten Sensoreinheit oder ein Signal der zweiten Sensoreinheit oder eine Kombination von beiden Signalen zur Festlegung des Ein- und / oder Ausschaltzeitpunkts des erstens Schalters.
Erfindungsgemäß schaltet die Steuereinheit den ersten Schalter aus, wenn der Strom durch den ersten Schalter einen maximalen Referenzwert überschreitet und schaltet zu dem Zeitpunkt wieder ein, wenn der Strom durch die LED einen minimalen Referenzwert unterschreitet, beispielsweise wenn die Spule entmagnetisiert ist und/oder die Diode sperrt.
In einer bevorzugten Ausführungsform der Erfindung ist die erste Sensoreinheit ein Messwiderstand (Shunt).
In einer weiteren Ausführungsform der Erfindung ist die zweite Sensoreinheit eine induktiv an die Spule gekoppelten Sekundärwicklung oder ein Hallsensor oder die zweite Sensoreinheit erkennt das Erreichen der Entmagnetisierung der Spule, indem sie die Spannung oberhalb des ersten Schalters mittels eines (ohmschen) Spannungsteilers überwacht.

Die Erfindung betrifft auch ein Verfahren zur Ansteuerung wenigstens einer LED.

Weitere bevorzugte Ausführungsformen und Weiterbildungen der Erfindung sind Gegenstand weiterer Unteransprüche.

Die vorliegende Erfindung wird nachfolgend anhand bevorzugter Ausführungsbeispiele unter Bezugnahme auf die beigefügten Zeichnungen näher beschrieben.
Figur 1a zeigt eine Schaltungsanordnung gemäß dem bekannten Stand der Technik
Figur 1b zeigt ein Diagram mit dem zeitlichen Verlauf des LEDstroms in der Schaltungsanordnung von Figur 1a (Stand der Technik)
Figur 2a zeigt ein erstes Beispiel einer erfindungsgemäßen Betriebsschaltung (Buck) für LEDs
Figur 2b zeigt ein Diagram, das zeitabhängige Stromverläufe und Steuersignale in der in Fig 2a dargestellten Schaltungsanordnung darstellt
Figur 3 und Figur 4 zeigen spezielle Ausführungsformen der Erfindung
Figur 5 zeigt eine Abwandlung der Schaltung von Figur 2a (Buck-Boost)
Figur 6 zeigt eine weitere spezielle Ausführungsform der Erfindung

Figur 1a und Figur 1b zeigen den Stand der Technik.

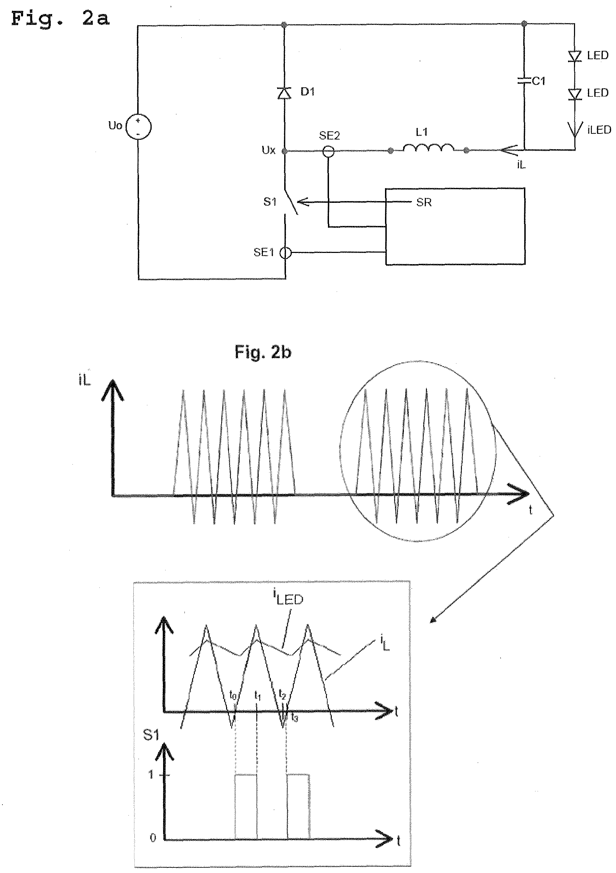

Die in Figur 2a dargestellte Schaltungsanordnung dient zum Betrieb von wenigstens einer (oder mehrerer in Serie und / oder parallel geschaltenen) LED. Im dargestellten Beispiel sind beispielsweise zwei LEDs in Serie geschaltet, es können natürlich auch nur eine oder mehrere LEDs sein. Die LED bzw. die seriell und / oder parallel geschaltenen LEDs werden im Folgenden auch LED-strecke genannt. Ein Vorteil der vorliegenden Erfindung ist, dass sich die Betriebsschaltung sehr flexibel an die Art und Anzahl der seriell verbundenen LEDs anpasst. Der Schaltung wird eine Gleichspannung U0 zugeführt, die natürlich auch eine gleichgerichtete Wechselspannung sein kann.
Die LEDs sind in Serie mit einer Spule L1 und einem ersten Schalter S1 verbunden. Zudem weist die Schaltungsanordnung eine Diode D1 (die Diode D1 ist parallel zu den LEDs und der Spule L1 geschaltet) und einen zu den LEDs parallel geschalteten optionalen Kondensator C1 auf.

Im eingeschalteten Zustand des ersten Schalters S1 fließt Strom durch die LEDs und durch die Spule L1, die dadurch magnetisiert wird. Im ausgeschaltenen Zustand des ersten Schalters S1 entlädt sich die im Magnetfeld der Spule gespeicherte Energie in Form eines Stroms über die Diode D1 und die LEDs. Parallel dazu wird am Beginn des Einschaltens des ersten Schalters S1 der Kondensator C1 geladen.

Während der Ausschaltphase des ersten Schalters S1 (Freilaufphase) entlädt sich der Kondensator C1 und trägt zum Stromfluss durch die LED-strecke bei. Bei geeigneter Dimensionierung des Kondensators C1 führt dies zu einer Glättung des Stroms durch die LEDs. Als erster Schalter S1 wird vorzugsweise ein Feldeffekttransistor oder auch Bipolartransistor verwendet. Der erste Schalter S1 wird hochfrequent geschaltet, typischerweise in einem Frequenzbereich von über 10 kHz, vorzugsweise über 50kHz.

Ein Vorteil dieser Betriebsart ist, dass der erste Schalter S1 im Betrieb geschont wird, wenn er, wie später ausgeführt, vorzugsweise dann eingeschaltet wird, wenn die an ihm anliegende Leistung nahezu null ist. Beim Stand der Technik dagegen, wo die Schaltvorgänge unter hoher Leistung ablaufen, muss für den ersten Schalter S1 ein hochwertiges Bauelement mit sehr kurzer Schaltdauer eingesetzt werden, um die Schaltverluste in einem tolerierbaren Rahmen zu halten.

Ein Vorteil dieser Betriebsart ist, dass für den ersten Schalter S1 und die Diode D1 durchaus auch ein vergleichsweise billigeres Bauelement mit vergleichsweise etwas längerer Schaltdauer oder längerer Ausräumzeit eingesetzt werden kann.

In der Schaltung von Figur 2a ist weiters eine Steuereinheit SR vorgesehen, die zur Regelung der LED-leistung die Taktung des ersten Schalters S1 vorgibt.

Die Steuereinheit SR verwendet zur Festlegung des genauen Einschalt- und Ausgangszeitpunkts des ersten Schalters S1 als Eingangsgrößen Signale von einer ersten Sensoreinheit SE1 und/oder Signale von einer zweiten Sensoreinheit SE2.

Die erste Sensoreinheit SE1 ist in Serie zum ersten Schalter S1 angeordnet und erfasst den Stromfluss durch den ersten Schalter S1. Dies dient zur Überwachung des Stromflusses durch den ersten Schalter S1. Übersteigt der Stromfluss durch den ersten Schalter S1 einen bestimmten ersten Referenzwert Ref1, so wird der erste Schalter S1 ausgeschaltet. In einer vorteilhaften Ausführungsform kann es sich bei der ersten Sensoreinheit SE1 beispielsweise um einen Messwiderstand (Shunt oder Strommesswiderstand) handeln.

Zur Überwachung des Stromflusses kann nun der Spannungsabfall am Messwiderstand (Shunt) abgegriffen werden und beispielsweise mittels eines Komparators mit einem Referenzwert verglichen werden.

Überschreitet der Spannungsabfall am Messwiderstand (Shunt) einen definierten ersten Referenzstrom Ref1, so wird der erste Schalter S1 geöffnet.

Die zweite Sensoreinheit SE2 ist innerhalb des Stromzweiges, der während der Freilaufphase vom Strom durchflossen wird, angeordnet, vorzugsweise in der Nähe oder an der Spule L1 oder auch in Serie oder parallel zu der LED (beispielsweise als Stromspiegel). Mit Hilfe der zweiten Sensoreinheit SE2 kann die Steuereinheit SR einen geeigneten Zeitpunkt für den Einschaltzeitpunkt des ersten Schalters S1 festlegen.

In einer bevorzugten Betriebsweise wird der ersten Schalter S1 vorzugsweise dann eingeschaltet, wenn der Strom durch die Spule L1 zum ersten Mal null ist oder zumindest sehr gering ist, dass heißt vorzugsweise in dem Zeitbereich, wenn die Diode D1 am Ende der Freilaufphase sperrt. In diesem Fall liegt zum Einschaltzeitpunkt des ersten Schalters S1 ein möglichst geringer Strom am Schalter S1 an. Durch Erkennen des Stromnulldurchgangs durch die Spule L1 wird ein nahezu verlustfreies Schalten ermöglicht. Vorzugsweise zeigt der Strom durch die LEDs nur geringe Welligkeit und schwankt nicht stark. Dies ist auf die glättende Wirkung des zu den LEDs parallel geschalteten Kondensators C1 zurückzuführen. Während der Phase eines geringen Spulenstroms übernimmt der Kondensator C1 die Speisung der LED.

Die Steuereinheit SR kann den Strom durch die Spule L1 während der Einschaltzeit des ersten Schalters S1 überwachen, und sofern ein definierter erster Referenzstrom Ref1 überschritten wird, den Schalter S1 öffnen, wobei in weiterer Folge die Steuereinheit SR eine Erkennung des Erreichens der Entmagnetisierung der Spule L1 durchführt, wobei bei Erkennung des Erreichens der Entmagnetisierung der Spule L1 der Schalter S1 wieder geschlossen wird. Bei Überschreiten eines definierten zweiten Referenzstromes Ref2 durch den Schalter S1 während der Einschaltzeit des ersten Schalters S1 wird der Schalter S1 geöffnet und nachfolgend für eine vorgegebene Pausenzeitspanne wird die Erkennung des Erreichens der Entmagnetisierung der Spule L1 deaktiviert. Auf diese Weise kann vermieden werden, dass eine durch Einkopplungen fälschlicherweise erkanntes Erreichens der Entmagnetisierung der Spule L1 im Falle eines Fehlers wie beispielsweise bei einem Kurzschluß zu einem Verfühten Wiedereinschalten des ersten Schalters S1 führt.

Die einzelnen Stromverläufe und der optimale Einschaltzeitpunkt des ersten Schalters S1 sollen anhand des Diagrams in Figur 2b näher erläutert werden.

Analog zu Diagram in Figur 1b ist der zeitliche Verlauf des Stroms i_L über zwei Pulspakete dargestellt.

Die vergrößerte Darstellung zeigt den Stromverlauf innerhalb eines PWM Pulspaketes: Es ist der zeitliche Verlaufs des Stroms i_L durch die Spule L1, der zeitliche Verlauf des Stroms i_LED durch die LEDs und der zeitliche Verlauf des Zustand des ersten Schalters S1 aufgetragen (Im Zustand 0 ist der erste Schalter S1 ausgeschaltet, im Zustand 1 ist der Schalter geschlossen; die Signale für den Zustand des Schalters S1 entsprechen dem Ansteuersignal (also am Gate) des Schalters S1). Zum Zeitpunkt t_0 wird der erste Schalter S1 geschlossen und es beginnt ein Strom durch die LED und die Spule L1 zu fließen. Der Strom i_L zeigt einen Anstieg gemäß einer Exponentialfunktion, wobei im hier interessierenden Bereich ein quasi-linearer Anstieg des Stroms i_L zu erkennen ist. i_LED unterscheidet sich von i_L dadurch, dass ein Teil des Stroms i_L zur Ladung des Kondensators C1 beiträgt. Das Öffnen des ersten Schalters S1 zum Zeitpunkt t_1 (beispielsweise wenn ein gewünschter maximaler Referenzwert erreicht ist) hat zur Folge, dass sich die im Magnetfeld der Spule gespeicherten Energie über die Diode D1 und die LEDs bzw. den Kondensator C1 entlädt. Der Strom i_L fließt in die gleiche Richtung weiter, nimmt aber kontinuierlich ab und kann sogar einen negativen Wert erreichen. Ein negativer Strom (d.h. ein Stromfluss mit umgekehrter Richtung) ist solange vorhanden, solange die Ladungsträger, die zuvor in der leitend gepolten Diode D1 angereichert wurden, aus der Sperrschicht der Diode D1 ausgeräumt sind.
Der Strom i_LED hingegen nimmt nur schwach ab und wird aufrechterhalten, da der Kondensator C1 glättend wirkt. Zum Zeitpunkt t_2 sperrt die Diode. Der Strom i_L nimmt ab (ist aber weiter negativ) und geht gegen null. In dieser Phase werden parasitäre Kapazitäten an der Diode D1 und weitere parasitäre Kapazitäten in der restlichen Schaltung umgeladen.
Die Spannungen am Knotenpunkt Ux oberhalb des ersten Schalters S1 und an der Spule L1 ändern sich in diesem Zeitraum sehr rasch. Die Spannung am Knotenpunkt Ux fällt auf einen niedrigen Wert ab (aufgrund des Sperrens der Diode D1). Ein vorteilhafter Wiedereinschaltzeitpunkt t_3 für den ersten Schalter S1 ist nun gegeben, wenn der Strom i_L den Nulldurchgang, oder zumindest die Nähe des Nulldurchgangs, erreicht. Zu diesem Zeitpunkt ist die Spule L1 nicht bzw. kaum magnetisiert. Der ersten Schalter S1 kann zu diesem Zeitpunkt mit sehr geringen Verlusten eingeschaltet werden, da kaum Strom durch die Spule L1 fließt. Ein Wiedereinschalten ist aber auch bereits zum Zeitpunkt t_2 oder kurz vorher möglich, da der Strom durch die Spule L1 in diesem Zeitbereich sehr niedrig ist.

Zur Detektion des vorteilhaften Einschaltzeitpunkts für den ersten Schalter S1 dient nun eine zweite Sensoreinheit SE2. In einer ersten Ausführungsform kann beispielsweise der Strom i_L durch die Spule L1 erfasst werden. Dies erfordert aber relativ aufwendige Schaltungen. Der Strom i_L durch die Spule L1 kann beispielsweise mittels eines Hallsensors erfasst werden. Zusätzlich oder alternativ können daher weitere/andere Größen herangezogen werden, die zur Detektion eines vorteilhaften Einschaltzeitpunkts geeignet sind.
In einer weiteren vorteilhaften Ausführungsform kann beispielsweise der Magnetisierungszustand der Spule L1 erfasst werden. Es kann sich bei der zweiten Sensoreinheit SE2 beispielsweise um eine Sekundärwicklung L2 an der Spule L1 handeln, die die Spannung an der Spule L1 abgreift. Die Überwachung des zeitlichen Spannungsverlaufs an der Spule L1 (insbesondere des 'Einbruchs' kurz nach Sperren der Diode D1 nach dem Zeitpunkt t_2) ermöglicht eine Aussage über den vorteilhaften Wiedereinschaltzeitpunkts des ersten Schalters S1. In einer einfachen Ausführungsvariante würde ein Komparator reichen, der das Erreichen der Entmagnetisierung (und somit den Nulldurchgang) anhand des Über- bzw. Unterschreitens eines Schwellwerts erkennen kann.

Anstatt oder ergänzend zur Spannungsüberwachung an der Spule L1 kann beispielsweise die Spannung am Knotenpunkt Ux oberhalb des ersten Schalters S1 überwacht werden. Die Spannung am Knotenpunkt Ux fällt beim Sperren der Diode von einem hohen Wert signifikant ab auf einen niedrigen Wert. Das Signal zum Wiedereinschalten des ersten Schalters S1 kann daher bei Unterschreiten der Spannung Ux unter einem gewissen Schwellwert ausgelöst werden. Die Steuereinheit SR schaltet den ersten Schalter S1 zu dem Zeitpunkt wieder ein, wenn die Spule L1 entmagnetisiert ist und/oder die Diode D1 sperrt. Die zweite Sensoreinheit SE2 kann dabei aus einer induktiv an die Spule L1 gekoppelten Sekundärwicklung L2 oder aus einem Spannungsteiler (R1, R2) am Knotenpunkt Ux bestehen.

Für den Betrieb der Betriebsschaltung und die Einstellung des Stromes durch die LED sind aber auch andere Regelmechanismen denkbar, so kann beispielsweise das Unterschreiten eines vorgegebenen Schwellwertes für den LED Strom eine Bedingung für das Wiedereinschalten sein. Es wäre auch eine Regelung nur aufgrund des während der Einschaltphase des Schalters S1 erfassten Stromes durch den Messwiderstand (Shunt) RS möglich, wobei in diesem Fall beispielsweise die Einschaltzeit des Schalters S1 bei fixer Taktfrequenz verändert werden kann oder es kann der LED Strom anhand des über die Zeit gemittelten Stromes geregelt werden.

Die Steuereinheit SR verwendet die Information von der ersten Sensoreinheit SE1 und/oder der zweiten Sensoreinheit SE2 zur Festlegung des Aus- und Einschaltzeitpunkts des ersten Schalter S1 und generiert somit ein hochfrequentes Signal zur direkten oder indirekten Regelung des LED Stromes. Es ist auch eine Leistungsregelung mittels der Auswertung der der Betriebsschaltung zugeführten Leistung denkbar.

Die Ansteuerung des Schalters S1 ist von einer Regelschleife abhängig, wobei abhängig von zumindest einem vorgegebenen Sollwert für einen Strom und / oder eine Spannung innerhalb der Betriebsschaltung und dem Vergleich mit einem Istwert zumindest der erste Schalter S1 durch eine hochfrequente Ansteuerung getaktet wird.

Beispielsweise kann die Betriebsschaltung im Hysteritischen Modus betrieben werden, wobei der Schalter S1 abhängig vom Erreichen von Schwellwerten ein- und ausgeschaltet wird.
Die Einstellung der Helligkeit und somit der zeitlich gemittelten LEDleistung durch die Steuereinheit SR kann beispielsweise in Form von PWM-Signalen erfolgen. Die Frequenz dieses PWM Signals liegt typischerweise in der Größenordnung von 100 - 1000 Hz und wird vorzugsweise dem hochfrequenten Ansteuersignal der Regelung (beispielsweise der Regelung des LED Stromes) überlagert.

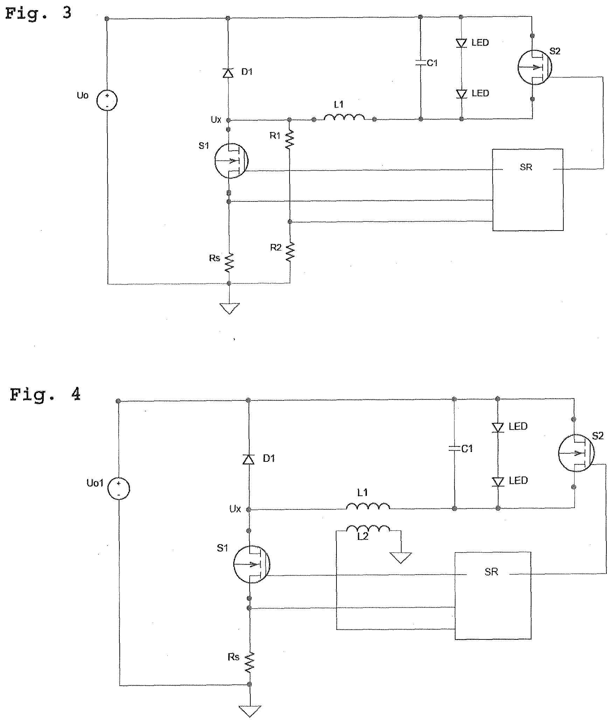

Figur 3 bis Figur 6 zeigen spezielle Ausführungsformen der Erfindung, auf die ebenfalls die Fehlererkennnung gemäß der Erfindung angewendet werden kann.

In Figur 3 ist eine spezielle Ausführungsform der oben beschriebenen Schaltanordnung (eines Tiefsetzstellers bzw. Buck-Converter) dargestellt. Der vorteilhafte Ausschaltzeitpunkt wird hierbei mittels Erfassung der Spannung am Knotenpunkt Ux oberhalb des ersten Schalters S1 detektiert. Diese erfolgt durch den ohmschen Spannungsteiler R1 und R2. Der Knotenpunkt Ux liegt zwischen der Spule L1, der Diode D1 und dem Schalter S1.

Als Spannungsteiler ist beispielsweise auch ein kapazitiver Spannungsteiler oder kombinierter Spannungsteiler, der aus Widerstand und Kapazität aufgebaut ist, möglich. Der Messwiderstand (Shunt) RS dient zur Stromerfassung durch den ersten Schalter S1. Die Überwachung des zeitlichen Spannungsverlaufs am Knotenpunkt Ux (insbesondere des 'Einbruchs' kurz nach Sperren der Diode D1 in der Nähe des Zeitpunkts t_2) ermöglicht eine Aussage über den vorteilhaften Wiedereinschaltzeitpunkt des ersten Schalters S1.

Anstatt oder ergänzend zu einer Spannungsüberwachung an der Spule L1 kann beispielsweise die Spannung am Knotenpunktes Ux oberhalb des ersten Schalters S1 überwacht werden. Die Spannung am Knotenpunkt Ux fällt beim Sperren der Diode von einem hohen Wert signifikant ab auf einen niedrigen Wert. Das Signal zum Wiedereinschalten des ersten Schalters S1 kann daher bei Unterschreiten der Spannung Ux unter einem gewissen Schwellwert ausgelöst werden.

In Schaltungsanordnung von Figur 3 ist zusätzlich ein zweiter Schalter S2 parallel zu den LEDs und dem Kondensator C1 angeordnet. Der zweite Schalter S2 ist selektiv/unabhängig ansteuerbar und kann beispielsweise ein Transistor (MOSFET oder Bipolartransistor) sein. Wird der zweite Schalter S2 geschlossen, so wird der Entladevorgang des Kondensators C1 beschleunigt. Durch die beschleunigte Entladung des Kondensators C1 wird erreicht, dass der Stromfluss durch die LED möglichst schnell gegen null geht. Dies ist beispielsweise am Ende eines PWM-Pakets erwünscht, wo der Stromfluss durch die LED möglichst schnell abfallen soll d.h. die abfallende Flanke des Stromsverlaufs möglichst steil sein soll (aus Gründen der Farbkonstanz).
Vorzugsweise kann der zweite Schalter S2 bei niedrigem Dimmlevel aktiviert und angesteuert werden, wo die PWM-Pakete sehr kurz sind und es wichtig ist, dass der Strom durch die LED am Ende eines Pulspakets rasch gegen null geht. Beispielsweise kann durch geeignete Ansteuerung des zweiten Schalters S2 ein noch niedrigeres Dimmlevel erreicht werden.

Eine weitere Funktion dieses zweiten Schalters S2 ist, dass er im eingeschalteten Zustand die LEDs überbrückt. Dies ist beispielsweise erforderlich, wenn die LEDs ausgeschaltet werden sollen, d.h. kein Licht emittieren sollen, aber die Versorgungsspannung U0 noch anliegt. Ohne die Überbrückung durch den zweiten Schalter S2 würde ein (zwar kleiner) Strom über die LEDs und die Widerstände R1 und R2 fließen und die LEDs (geringfügig) leuchten.

Es sei angemerkt, dass die Anordnung eines zweiten Schalters S2 parallel zu den LEDs und dem Kondensator C1 zur beschleunigten Entladung des Kondensators C1 bzw. zur Überbrückung der LED nicht nur auf die spezielle Ausführungsform der Schaltungsanordnung von Figur 3 beschränkt ist, sondern bei verschiedenen Ausführungsformen der Erfindung als zusätzliche Verbesserung angewandt werden kann..

Figur 4 zeigt eine Modifikation von der Schaltung in Figur 3 dahingehend, dass die Spannungsüberwachung an der Spule L1 erfolgt. Die Spannung an der Spule L1 kann beispielsweise mittels einer Sekundärwicklung L2, die an die Spule L1 gekoppelt ist, (bzw. eine zusätzliche Spule L2, die induktiv an die Spule L1 koppelt) erfasst werden. Zur Detektion des vorteilhaften Einschaltzeitpunkts für den ersten Schalter S1 dient nun eine Sekundärwicklung L2. Die Überwachung des zeitlichen Spannungsverlaufs an der Spule L1 (insbesondere des 'Einbruchs' in der Nähe des Sperrens der Diode D1 nach dem Zeitpunkt t_2) ermöglicht eine Aussage über den vorteilhaften Wiedereinschaltzeitpunkt des ersten Schalters S1.
Diese Überwachung kann wie bereits erwähnt auch anhand einer Sekundärwicklung L2 erfolgen.
Die Bestimmung des Zeitpunkts des Nulldurchgangs bzw. der Entmagnetisierung kann wie bereits erwähnt auch mittels einer Schwellwertüberwachung erfolgen (auf das Unter- oder Überschreiten eines Schwellwerts, bei einer Überwachung mittels einer Sekundärwicklung L2 hängt die Polarität der Spannung von dem Wicklungssinn der Sekundärwicklung L2 zu der Spule L1 ab).

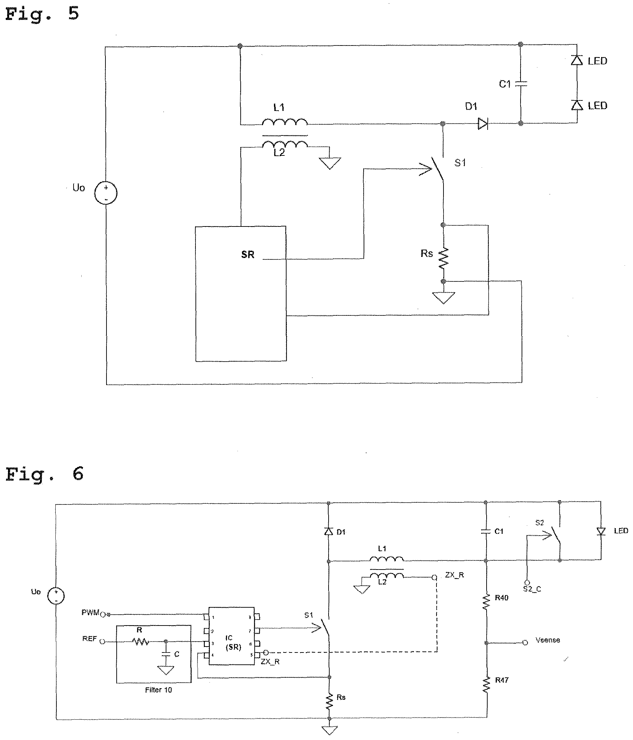

Es sei bemerkt, dass das Verfahren zur Detektion eines vorteilhaften Einschaltzeitpunkts für den ersten Schalter S1 natürlich auf andere Schaltungstopologien angewandt werden kann, so beispielsweise für einen sogenannten Sperrwandler bzw. Buck-Boost Converter oder einen sogenannten Durchflusswandler bzw. Forward Converter. Figur 5 zeigt eine Modifikation der Schaltung von Figur 2a dahingehend, dass die Anordnung der Drossel L1, der Diode D1 sowie der Orientierung der LED-strecke modifiziert ist (bildet Sperrwandler bzw. Buck-Boost Converter).

Eine mögliche Weiterbildung der Erfindung ist in Fig. 6 dargestellt. Die Erkennung des Erreichens der Entmagnetisierung der Spule L1 anhand Überwachung der Spannung an der Wicklung L2 kann durch einen standardmäßig verfügbaren Steuerschaltkreis IC durchgeführt werden. Dieser Steuerschaltkreis IC (integrierter Schaltkreis), entspricht der bzw. enthält die Steuereinheit SR gemäß Fig. 2 bis 5, verfügt über einen Eingang zur Erkennung des Erreichens der Entmagnetisierung einer Spule anhand Überwachung der Spannung an einer auf der Spule aufgebrachten Sekundärwicklung.
Weiterhin verfügt der Steuerschaltkreis IC über einen Ausgang zur Ansteuerung eines Schalters und über weitere Überwachungseingänge.
Ein erster dieser Überwachungseingänge kann für die Vorgabe eines Referenzwertes wie bspw. einer Referenzspannung genutzt werden.

Ein zweiter Überwachungseingang kann für die Überwachung des Erreichens einer maximalen Spannung oder auch anhand einer Spannungsmessung an einem Widerstand zur Überwachung des Erreichens eines maximalen Stromes genutzt werden. Ein dritter Überwachungseingang kann für die Überwachung einer weiteren Spannung oder auch zur Aktivierung und Deaktivierung des Steuerschaltkreis IC oder der Ansteuerung den Steuerschaltkreis IC angesteuerten Schalters genutzt werden.

Gemäß der Fig. 6 überwacht der Steuerschaltkreis IC den Strom durch den ersten Schalter S1 während der Einschaltphase des ersten Schalters S1 über den Meßwiderstand (Shunt) Rs und den Eingang 4 am Steuerschaltkreis IC. Sobald die Spannung, die über dem Meßwiderstand (Shunt) Rs abgegriffen wird, einen bestimmten Maximalwert erreicht, wird der ersten Schalter S1 geöffnet. Die Vorgabe der zum Öffnen des ersten Schalters S1 erforderlichen Höhe der Spannung kann durch die Vorgabe eines Referenzwertes (d.h. einer Referenzspannung) am Eingang 3 des Steuerschaltkreis IC angepasst werden.

Beispielsweise kann von einem Microcontroller eine Referenzspannung vorgegeben werden, die die Höhe der maximal über dem Meßwiderstand (Shunt) Rs zulässigen Spannung und damit den maximal durch den ersten Schalter S1 zulässigen Strom vorgibt.

Beispielweise kann der Microcontroller ein PWM-Signal ausgeben, dass dann durch ein Filter 10 geglättet wird (beispielsweise ein RC-Glied) und somit als Gleichspannungssignal mit einer bestimmten Amplitude an dem Eingang 3 des Steuerschaltkreis IC anliegt. Durch Änderung des Tastverhältnisses des PWM-Signales des Microcontrollers kann die Amplitude des Signales am Eingang 3 des Steuerschaltkreis IC angepasst werden.

Der Steuerschaltkreis IC kann über den Eingang 5 anhand der Überwachung der Spannung an einer auf der Spule L1 aufgebrachten Sekundärwicklung L2 das Erreichen der Entmagnetisierung der Spule L1 erkennen. Diese Erkennung kann als Wiedereinschaltsignal genutzt werden. Sobald die Entmagnetisierung der Spule L1 durch den Steuerschaltkreis IC erkannt wurde, kann der Steuerschaltkreis IC den ersten Schalter S1 durch eine Ansteuerung über den Ausgang 7 einschalten.

Der Steuerschaltkreis IC kann durch Anlegen einer Spannung am Eingang 1 aktiviert und / oder auch deaktiviert werden. Diese Spannung zum Aktivieren am Eingang 1 kann auch zwischen einem Hoch- und einem Tiefpegel wechseln, wobei bei Hochpegel der Steuerschaltkreis IC aktiviert wird und bei Tiefpegel zumindest die Ansteuerung des ersten Schalters S1 unterbricht.
Diese Ansteuerung des Eingangs 1 kann durch einen Microcontroller erfolgen. Beispielsweise kann auf diese Weise eine niederfrequente Aktivierung und Deaktivierung des Steuerschaltkreis IC und somit der Ansteuerung des ersten Schalters S1 erreicht werden und somit die niederfrequente Ansteuerung des Betriebsschaltung zum Dimmen der LED.
Über den Eingang 1 kann über die Amplitude des an diesem Eingang anliegenden Signales weiterhin auch eine weitere Referenzspannung für den Steuerschaltkreis IC vorgegeben werden. Diese Spannung kann beispielsweise auch die Höhe des maximal zulässigen Stromes durch den Schalter beeinflussen oder aber auch die zulässige Einschaltdauer des ersten Schalters S1. Der Steuerschaltkreis IC und/oder der Steuerschaltkreis IC kombiniert mit dem Microcontroller können gemeinsam die Steuereinheit SR bilden.

Die Einschaltdauer des ersten Schalters S1 kann auch von einer weiteren Spannungsmessung innerhalb der Betriebsschaltung abhängig sein. Beispielweise kann dem Steuerschaltkreis IC auch eine Spannungsmessung Vsense zugeführt werden.
Über diese Spannungsmessung kann über einen Spannungsteiler R40/ R47 beispielweise eine Überwachung oder auch Messung der Spannung am Knotenpunkt zwischen Spule L1 und LED erfolgen. Diese Spannungsmessung Vsense kann entweder einem weiteren Eingang des Steuerschaltkreises IC, als zusätzliche Größe additiv einem bereits belegten Eingang des Steuerschaltkreis IC oder auch einen Eingang des Microcontrollers zugeführt werden.
Somit kann ein System aufgebaut werden, bei dem zum einen eine einfache Ansteuerung zum Dimmen von LED durch niederfrequente PWM ermöglicht wird, zum anderen ein möglichst verlustarmer hochfrequenter Betrieb des Betriebsgerätes kombiniert mit einem möglichst konstanten Strom durch die LED.

Es kann durch einen Microcontroller sowohl die Frequenz als auch das Tastverhältnis eines PWM-Signales zum Dimmen von LED vorgegeben werden, daneben kann auch die Höhe des maximal zulässigen Stromes durch den ersten Schalter S1 vorgegeben werden. Der Microcontroller kann über ein Signal, welches an den Eingang 1 des Steuerschaltkreis IC geführt wird, das Dimmen der LED durch niederfrequente PWM steuern. Weiterhin kann der Microcontroller über ein Signal, welches an den Eingang 3 des Steuerschaltkreis IC geführt wird, die Höhe des maximal zulässigen Stromes durch den ersten Schalter S1 oder auch die notwendige Einschaltdauer des ersten Schalters S1 vorgegeben.

Die Betriebsschaltung kann weiterhin einen weiteren Schalter S2 enthalten, der so angeordnet ist, dass dieser zweiten Schalter S2 die LED überbrücken kann. Der zweite Schalter S2 kann weiterhin so angeordnet sein, dass er den Strom durch einen vorhandenen hochohmigen Spannungsmesspfad oder eine ähnliche vorhandene hochohmige Schaltungsanordnung von der LED übernehmen oder diesen unterbrechen kann.

Durch Parallelschaltung des zweiten Schalters S2 zu den LED kann dieser die LED überbrücken und somit deaktivieren.

Dieses Verfahren kann zum Einstellen der Helligkeit (Dimmen) der LED genutzt werden. Eine mögliche Variante wäre, dass das Dimmen über den zweiten Schalter S2 erfolgt, während über die Ansteuerung des ersten Schalters S1 nur der Strom durch die LED eingestellt und geregelt wird.

Es kann aber die Ansteuerung der beiden Schalter S1 und S2 für eine optimierte Dimmansteuerung kombiniert genutzt werden. So kann beispielsweise der zweite Schalter S2 nur für das Dimmen auf niedrige Dimmlevel zusätzlich genutzt werden. Die Betriebsschaltung ist aufgrund der vorhandenen Topologie und der Regelschaltung so ausgelegt, dass die Ausgangsspannung der Betriebsschaltung (d.h. die Spannung über der LED) auf einen maximal zulässigen Wert begrenzt wird. Wird durch Schließen des zweiten Schalters S2 die LED überbrückt, dann begrenzt die Betriebsschaltung die Ausgangsspannung derart, dass kein überhöhter Strom fließen kann, der zu einer möglichen Zerstörung führen kann. Diese Ansteuerung des zweiten Schalters S2 kann beispielsweise nur für das Dimmen auf niedrige Dimmlevel genutzt werden.

Wenn der Tiefsetzsteller (Buck-Converter) fix auf Stromquellenbetrieb (im sogenannten Hysteritischen Modus wie in den Ausführungsbeispielen beschrieben) arbeitet und effizient läuft, können die LED einzig mit zweiten Schalter S2, der sehr niederohmig sein sollte, gedimmt werden, und die Verluste sind trotzdem gering.

Zusätzlich kann der zweite Schalter S2 so angesteuert werden, dass er den Strom durch einen vorhandenen hochohmigen Spannungsmesspfad oder eine ähnliche vorhandene hochohmige Schaltungsanordnung von der LED übernehmen kann.
Wenn beispielsweise gemäß Fig. 6 der erste Schalter S1 nicht getaktet wird, sollte kein Strom durch die LED fließen. Aufgrund des vorhandenen Spannungsteilers R40/ R47 kann jedoch ein geringer Strom durch die LED fließen. In diesem Fall kann bei einer gewünschten Deaktivierung der LED (beispielsweise wenn kein Licht abgegeben werden soll) der zweite Schalter S2 geschlossen werden, damit der Stromfluß durch die LED unterbrochen oder vermieden wird.

Der zweite Schalter S2 kann zumindest immer im Anschluss an ein niederfrequentes PWM-Paket angesteuert werden, um die LED zu überbrücken bzw. zu deaktivieren (während der letzten Entladeflanke, das heißt am Ende eines PWM Pulspaketes). Eine Unterbrechung des Stromes durch die LED kann auch durch Anordnung des zweiten Schalters S2 in Serie mit den LED erfolgen.

Das Beispiel der Fig. 6 (und die anderen natürlich auch) kann dahingehend erweitert werden, dass mehrere Betriebsschaltungen gemäß Figur 6 vorhanden sind. Die Steuerschaltkreise IC bzw. die Steuereinheiten SR der einzelnen Betriebsschaltungen werden von einem gemeinsamen Microcontroller aus angesteuert. Die einzelnen Betriebsschaltungen können beispielsweise LED-stränge unterschiedlicher Wellenlänge oder Farbe ansteuern. Die Ansteuerung des Microcontrollers kann über eine Schnittstelle (drahtlos oder leitungsgebunden) erfolgen. Dabei können Steuersignale zum Einstellen der Helligkeit oder Farbe oder auch Statusinformationen über die Schnittstelle übertragen werden.

Ein Problem bei derartigen Betriebsschaltungen ist die Unterscheidung zwischen einem Kurzschluss und einem Lastsprung.
Beispielsweise bei einer Anwendung eines Tiefsetzstellers (Buck-Konverters) wie in Fig. 2a: Ein Lastsprung auf eine kleinere Last bedeutet einen schnelleren Stromanstieg. Bei einer konstanten Einschaltzeit-Regelung für den Schalter S1 übersteigt der Stromwert den eingestellten Sollwert. Aufgrund der trägen Regelung entstehen so hohe Ströme, welche die LED (LED-Strecke) beschädigen könnten. Bei einem Kurzschluss ereignet sich das gleiche, was die Kurzschlusserkennung erschwert.

Für den Betrieb der Betriebsschaltung und die Einstellung des Stromes durch die LED ist beispielsweise eine Regelung nur aufgrund des während der Einschaltphase des Schalters S1 erfassten Stromes durch den Messwiderstand (Shunt) RS möglich, wobei in diesem Fall beispielsweise die Einschaltzeit des Schalters S1 bei fixer Taktfrequenz verändert werden kann oder es kann der LED Strom anhand des über die Zeit gemittelten Stromes geregelt werden. Gerade bei Regelschleifen, wo der erfasste Strom zeitlich gemittelt wird, beispielsweise über einen Teil einer Schaltperiode oder auch über mehrere Schaltperioden, kann das Problem auftreten, dass diese Regelung zu langsam ist, um einen Fehler wie beispielsweise einen Kurzschluß oder eine Unterlast sicher zu erkennen und rechtzeitig darauf zu reagieren.
Die Erfindung beschreibt einen Weg um die Erkennung eines Kurzschlusses von einem Lastsprung zu unterscheiden.

Ein Komparator (innerhalb der Steuereinheit SR angeordnet, nicht dargestellt) detektiert den Spulenstrom IL1 (über eine erste Sensoreinheit SE1 oder eine zweite Sensoreinheit SE2, z.B. über einen Shuntwiderstand Rs) und schaltet bei einem definierten (vorgegebenen) Maximalstrom die Stromzufuhr zur Last aus (z.B. Schalter S1 wird geöffnet).

Gleichzeitig wird für die aktuelle Einschaltzeit des Schalters S1 auf ein definiertes Minimum gesetzt (für die nächste Einschaltperiode). Das Minimum ist dabei so definiert, dass die kleinste definierte Lastspannung noch problemlos betrieben werden kann. Spricht der Komparator nun bei der nächsten Periode wieder an, wird ein Kurzschluss erkannt. Spricht er nicht an, erfolgte ein Lastwechsel, wobei die Einschaltzeit wieder auf den Sollstrom geregelt werden kann. Es wird also bei wiederholtem Überschreiten der Schwelle für den definierten Maximalstrom ein Fehler erkannt, wobei nach dem erstmaligen Überschreiten die Einschaltzeit des Schalters S1 auf ein vorgegebenes Minimum gesetzt wird. Im Fehlerfall kann die Betriebsschaltung zumindest zeitweise abgeschaltet werden, beispielsweise durch Abschalten der Taktung des Schalters S1 durch die Steuereinheit SR. So kann die Steuereinheit SR beispielsweise bei Erkennen eines Fehlerfalls (Kurzschlußfehler) in einen Fehlerbetriebsmodus wechseln.

In diesem Fehlerbetriebsmodus kann die Taktung des Schalters S1 nur zeitweise, beispielsweise in einzelnen Pulspaketen, erfolgen und für größere Zeiträume deaktiviert werden. Es kann dadurch eine Erkennung zu diesen Zeiten der zeitweisen Taktung ermöglicht werden, wo erfasst werden kann, ob der Fehler noch vorhanden ist. Wenn der Fehler nicht mehr vorhanden ist, kann auch wieder in den Normalbetriebsmodus gewechselt werden.

Ein Lastsprung kann aber z.B. auch beim Zu- und Wegschalten der LED im Betrieb, also bspw. beim Anklemmen der LED Last im Betrieb oder durch Unterbrechungen der Anschlüsse aufgrund von Kontaktproblemen, erfolgen.

Ein Lastsprung auf eine kleinere Last bedeutet einen schnelleren Stromanstieg. Beispielsweise bei einer Regelung mit konstanter Einschaltzeit und variablen Ausschaltzeit oder auch einer Regelung des Einschaltverhältnisses bei konstanter Frequenz übersteigt in einem solchen Fall eines Lastsprunges der Istwert des Stromes den vorgegebenen Sollwert. Aufgrund der trägen Regelung können derart hohe Ströme entstehen, welche die angeschlossene LED beschädigen könnte. Bei einem Kurzschluss wird sich ein ähnlicher Ablauf einstellen, was die Kurzschlusserkennung erschwert.

Ein Erkennen eines Kurzschlußfehlers oder auch das Wechseln in den Fehlerbetriebsmodus kann auch als Fehlermeldung über eine Schnittstelle oder auch optisch oder akustisch signalisiert werden.

Die Steuereinheit SR kann durch einen Microcontroller, FPGA, PAL oder auch einen anwendungsspezifischen integrierten Schaltkreis gebildet werden.

Somit wird eine Betriebsschaltung für wenigstens eine LED ermöglicht, der eine Gleichspannung oder gleichgerichtete Wechselspannung zugeführt wird und die mittels einer Spule L1 und einem durch eine Steuereinheit SR getakteten ersten Schalter S1 eine Versorgungsspannung für wenigstens eine LED bereitstellt, wobei bei eingeschaltetem erstem Schalter S1 in der Spule L1 eine Energie zwischengespeichert wird, die sich bei ausgeschaltetem erstem Schalter S1 über eine Diode D1 und über wenigstens eine LED entlädt. Die Steuereinheit SR überwacht den Strom durch die Spule L1 oder durch den Schalter S1 während der Einschaltzeit des ersten Schalters S1, und sofern ein definierter Maximalstrom überschritten wird, wird die Einschaltzeit des Schalters S1 auf ein definiertes Minimum gesetzt, und bei wiederholtem Überschreiten der Schwelle für den definierten Maximalstrom wird ein Fehler erkannt.

Da der Strom durch die Spule L1 bei eingeschaltetem Schalter S1 dem Strom durch den Schalter S1 entspricht, wird somit sowohl die Spule L1 als auch der Schalter S1 wirkungsvoll vor einer Überlastung geschützt.

Dieses Fehlererkennungsverfahren ist natürlich nicht auf die Tiefsetzstellertopologie (Buck-Konverter) begrenzt.

Die erfindungsgemäße Ansteuerung ist wie bereits erwähnt nicht auf die Topologie oder Schaltungsanordnung der Fig. 2 begrenzt, es sind genauso Implementierungen nach den Schaltungen der weiteren Fig. 1 bis 6 möglich.

Beispielsweise kann diese Erfindung bei einem Tiefsetzsteller, Hochsetzsteller, Inverter (Buck-Boost-Konverter), isolierten Sperrwandler (Flayback-Konverter), Sepic-Wandler oder auch anderen Topologien und Schaltungsanordnungen angewendet werden.

Die Erfindung betrifft grundsätzlich Betriebsschaltungen für wenigstens eine LED, die mittels eines Schaltreglers über einen getakteten ersten Schalter S1 versorgt werden, wobei über die Frequenz und / oder das Einschaltverhältnis des getakteten Schalters S1 der Strom durch die LED beeinflusst wird, und die Frequenz und / oder das Einschaltverhältnis des getakteten Schalters S1 durch eine Steuereinheit SR als Ansteuersignal vorgegeben wird.

Somit wird auch ein Verfahren zur Ansteuerung wenigstens einer LED ermöglicht, wobei der LED über eine getaktete Betriebsschaltung durch eine Steuereinheit SR getakteten ersten Schalter S1 eine Versorgungsspannung bereitgestellt wird. Die Steuereinheit SR überwacht einen Strom in der Betriebsschaltung (beispielsweise den Strom durch die Spule L1, durch die LED oder durch den Schalter S1) während der Einschaltzeit des ersten Schalters S1, und sofern ein definierter Maximalstrom überschritten wird, wird die Einschaltzeit des Schalters S1 auf ein definiertes Minimum gesetzt, und bei wiederholtem Überschreiten dieser Schwelle für den definierten Maximalstrom wird einen Fehler erkannt.

Das definierte Minimum für den überwachten Strom, welches als Schwelle für eine Fehlererkennung nach Überschreiten eines definierten Maximalstroms gesetzt wird, liegt vorzugsweise unterhalb eines im Normalbetrieb zu erwartendem Sollwert für den zu überwachenden Strom (beispielsweise den Strom durch die Spule L1, durch die LED oder durch den Schalter S1).

Bei dem Beispiel der Fig. 6 kann der Steuerschaltkreise IC derart beeinflusst werden, dass die Vorgabe eines Referenzwertes (d.h. einer Referenzspannung) am Eingang 3 des Steuerschaltkreis IC angepasst wird. Somit muß nicht die gesamte Fehlererkennung für einen Kurzschlußfall in dem Steuerschaltkreise IC integriert sein, sondern es kann auch eine zusätzliche Fehlererkennungsschaltung (beispielsweise im externen Microcontroller) ergänzend angeordnet sein. So kann diese Fehlererkennungsschaltung das Signal am Eingang 3 entsprechend herabsetzen, wenn zum ersten Mal ein Überschreiten eines definierten Maximalstroms erkannt wurde. Dadurch kann über den Eingang 3 eine Vorgabe für das definierte Minimum des zu überwachenden Stromes (hier der Strom durch die Spule L1 bzw. der Strom durch den Schalter S1 während der Einschaltzeit) erfolgen. Wenn jetzt wiederum ein überhöhter Stromfluß erkannt wird, dann kann der Steuerschaltkreise IC deaktiviert werden. Bei diesem Beispiel kann der Komparator zur Überwachung des Stromflußes durch die Spule L1 bzw. den Schalter S1 als zusätzliches Bauteil außerhalb des Steuerschaltkreise IC angeordnet sein oder auch in dem Microcontroller, welcher auch die Referenzwerte für den Steuerschaltkreis IC vorgibt, angeordnet sein.

## Patentansprüche

1. Betriebsschaltung für wenigstens eine LED,
a1) der eine Gleichspannung (U0) oder gleichgerichtete Wechselspannung zugeführt wird, und
a2) die mittels einer Spule (L1) und einem durch eine Steuereinheit (SR) getakteten ersten Schalter (S1) eine Versorgungsspannung für wenigstens eine LED bereitstellt, wobei
b1) bei eingeschaltetem erstem Schalter (S1) in der Spule (L1) eine Energie zwischengespeichert wird, die sich bei ausgeschaltetem erstem Schalter (S1) über eine Diode (D1) und über wenigstens eine LED entlädt; wobei
b2) die Spule (L1), die Steuereinheit (SR) und der von der Steuereinheit (SR) getaktete erste Schalter (S1) Teil der Betriebsschaltung sind; wobei
c) die Steuereinheit (SR) den Strom durch die Spule (L1) während der Einschaltzeit des ersten Schalters (S1) überwacht, und sofern ein definierter erster Referenzstrom (Ref1) überschritten wird, den ersten Schalter (S1) öffnet,
wobei in weiterer Folge die Steuereinheit (SR) eine Erkennung des Erreichens der Entmagnetisierung der Spule (L1) durchführt,
wobei bei Erkennung des Erreichens der Entmagnetisierung der Spule (L1) der erste Schalter (S1) wieder geschlossen wird, und
***dadurch gekennzeichnet, dass*** die Steuereinheit
d1) bei Überschreiten eines definierten zweiten Referenzstromes (Ref2) durch den ersten Schalter (S1) während der Einschaltzeit des ersten Schalters (S1) den ersten Schalter (S1) öffnet und
d2) nachfolgend für eine vorgegebene Pausenzeitspanne die Erkennung des Erreichens der Entmagnetisierung der Spule (L1) deaktiviert.

2. Betriebsschaltung nach Anspruch 1,
**dadurch gekennzeichnet dadurch, dass**
die Steuereinheit (SR) bei wiederholtem Überschreiten des definierten zweiten Referenzstromes (Ref2) durch den ersten Schalter (S1) während der Einschaltzeit die Betriebsschaltung zeitweise abschaltet.

3. Betriebsschaltung nach einem der vorangehenden Ansprüche, **dadurch gekennzeichnet, dass** die Steuereinheit (SR) durch einen Microcontroller gebildet wird.

4. Verfahren zur Ansteuerung wenigstens einer LED mittels einer Betriebsschaltung,
a1) der eine Gleichspannung (U0) oder gleichgerichtete Wechselspannung zugeführt wird und
a2) die mittels einer Spule (L1) und einem durch eine Steuereinheit (SR) getakteten ersten Schalter (S1) eine Versorgungsspannung für wenigstens eine LED bereitstellt, wobei
b1) bei eingeschaltetem erstem Schalter (S1) in der Spule (L1) eine Energie zwischengespeichert wird, die sich bei ausgeschaltetem erstem Schalter (S1) über eine Diode (D1) und über wenigstens eine LED entlädt, wobei
b2) die Spule (L1), die Steuereinheit (SR) und der von der Steuereinheit (SR) getaktete erste Schalter (S1) Teil der Betriebsschaltung sind; wobei
c) die Steuereinheit (SR) den Strom durch die Spule (L1) während der Einschaltzeit des ersten Schalters (S1) überwacht, und sofern ein definierter erster Referenzstrom (Ref1) überschritten wird, den ersten Schalter (S1) öffnet,
wobei in weiterer Folge die Steuereinheit (SR) eine Erkennung des Erreichens der Entmagnetisierung der Spule (L1) durchführt, wobei bei Erkennung des Erreichens der Entmagnetisierung der Spule (L1) der erste Schalter (S1) wieder geschlossen wird, und **gekennzeichnet durch**
d1) Öffnen des ersten Schalters (1) bei Überschreiten eines definierten zweiten Referenzstromes (Ref2) durch den ersten Schalter (S1) während der Einschaltzeit des ersten Schalters (S1) und
d2) nachfolgend für eine vorgegebene Pausenzeitspanne Deaktivieren der Erkennung des Erreichens der Entmagnetisierung der Spule (L1).

5. Verfahren nach Anspruch 4,
**dadurch gekennzeichnet, dass**
die Steuereinheit (SR) bei wiederholtem Überschreiten des definierten zweiten Referenzstromes (Ref2) durch den ersten Schalter (S1) während der Einschaltzeit die Betriebsschaltung zeitweise abschaltet.

## Claims

1. Operating circuit for at least one LED,
a1) to which a direct voltage (U0) or a rectified alternating voltage is supplied, and
a2) which provides a supply voltage for at least one LED by means of a coil (L1) and a first switch (S1) clocked by a control unit (SR), wherein
b1) energy is temporarily stored in the coil (L1) when the first switch (S1) is switched on and is discharged via a diode (D1) and via at least one LED when the first switch (S1) is switched off; wherein
b2) the coil (L1), the control unit (SR) and the first switch (S1) clocked by the control unit (SR) are part of the operating circuit; wherein
c) the control unit (SR) monitors the current through the coil (L1) during the power-on time of the first switch (S1), and the first switch (S1) is opened when a defined first reference current (Ref1) is exceeded,
wherein the control unit (SR) subsequently detects the achievement of the demagnetization of the coil (L1);
wherein the first switch (S1) is closed again upon detection of the achievement of the demagnetization of the coil (L1),
**characterized in that**
the control unit
d1) opens the first switch (S1) when a defined second reference current (Ref2) is exceeded by the first switch (S1) during the power-on time of the first switch (S1), and
(d2) subsequently deactivates the detection of the achievement of the demagnetization of the coil (L1) for a predefined pause time.

2. Operating circuit according to claim 1,
**characterized in that**
the control unit (SR) temporarily switches off the operating circuit by means of the first switch (S1) during the power-on time in the event of repeated exceeding of the defined second reference current (Ref2).

3. Operating circuit according to one of the preceding claims,
**characterized in that**
the control unit (SR) is in the form of a microcontroller.

4. Method for controlling at least one LED by means of an operating circuit,
a1) to which a direct voltage (U0) or a rectified alternating voltage is supplied, and
a2) which provides a supply voltage for at least one LED by means of a coil (L1) and a first switch (S1) clocked by a control unit (SR), wherein
b1) (S1) is stored in the coil (L1) when the first switch (S1) is switched off, is discharged via a diode (D1) and via at least one LED,
b2) the coil (L1), the control unit (SR) and the first switch (S1) clocked by the control unit (SR) are part of the operating circuit, wherein
c) the control unit (SR) monitors the current through the coil (L1) during the power-on time of the first switch (S1), and opens the first switch (S1) if a defined first reference current (Ref1) is exceeded,
wherein the control unit (SR) subsequently detects achievement of the demagnetization of the coil (L1), wherein the first switch (S1) is closed again upon detection of achievement of the demagnetization of the coil (L1), and
**characterized in that**
d1) opening the first switch (1) when a defined second reference current (Ref2) is exceeded by the first switch (S1) during the power-on time of the first switch (S1), and,
d2) subsequent deactivation of the detection of achievement of the demagnetization of the coil (L1) for a predetermined pause time,

5. The method according to claim 4,
**characterized in that**
in the event of repeated exceeding of the defined second reference current (Ref2), the control unit (SR) switches off the operating circuit by means of the first switch (S1) during the power-on time.

## Revendications

1. Circuit d'exploitation pour au moins une LED,
a1) auquel est appliqué une tension continue (U0) ou une tension alternative redressée et
a2) qui génère une tension d'alimentation pour au moins une LED au moyen d'une bobine (L1) et d'un premier interrupteur (S1) cadencé par une unité de commande (SR),
b1) moyennant quoi, lorsque le premier interrupteur (S1) est activé, une énergie est stockée dans la bobine (L1), qui se décharge, lorsque le premier interrupteur (S1) est désactivé, par l'intermédiaire d'une diode (D1) et par l'intermédiaire d'au moins une LED ;
b2) la bobine (L1), l'unité de commande (SR) et le premier interrupteur (S1) cadencé faisant partie du circuit d'exploitation ;
c) l'unité de commande (SR) surveillant le courant à travers la bobine (L1) pendant le temps d'activation du premier interrupteur (S1) et ouvrant l'interrupteur (S1) dès qu'un premier courant de référence (Ref1) défini est dépassé,
moyennant quoi, dans la suite, l'unité de commande (SR) effectuant une détection de la démagnétisation de la bobine (L1),
moyennant quoi, lors de la détection de la démagnétisation de la bobine (L1), le premier interrupteur (S1) est refermé et
**caractérisé en ce que**
l'unité de commande
d1) ouvre le premier interrupteur (S1) lors du dépassement d'un deuxième courant de référence (Ref2) défini à travers le premier interrupteur (S1) pendant le temps d'activation du premier interrupteur (S1) et
d2) désactive ensuite, pendant un temps de pause prédéfini, la détection de la démagnétisation de la bobine (L1).

2. Circuit d'exploitation selon la revendication 1,
**caractérisé en ce que**
l'unité de commande (SR) désactive temporairement le circuit d'exploitation lors d'un dépassement répété du deuxième courant de référence (Ref2) défini à travers le premier interrupteur (S1) pendant le temps d'activation.

3. Circuit d'exploitation selon l'une des revendications précédentes, **caractérisé en ce que** l'unité de commande (SR) est constituée d'un micro-contrôleur.

4. Procédé de commande d'au moins une LED au moyen d'un circuit d'exploitation,
a1) auquel est appliqué une tension continue (U0) ou une tension alternative redressée et
a2) qui génère une tension d'alimentation pour au moins une LED au moyen d'une bobine (L1) et d'un premier interrupteur (S1) cadencé par une unité de commande (SR),
b1) moyennant quoi, lorsque le premier interrupteur (S1) est activé, une énergie est stockée dans la bobine (L1), qui se décharge, lorsque le premier interrupteur (S1) est désactivé, par l'intermédiaire d'une diode (D1) et par l'intermédiaire d'au moins une LED ;
b2) la bobine (L1), l'unité de commande (SR) et le premier interrupteur (S1) cadencé faisant partie du circuit d'exploitation ;
c) l'unité de commande (SR) surveillant le courant à travers la bobine (L1) pendant le temps d'activation du premier interrupteur (S1) et ouvrant l'interrupteur (S1) dès qu'un premier courant de référence (Ref1) défini est dépassé,
moyennant quoi, dans la suite, l'unité de commande (SR) effectuant une détection de la démagnétisation de la bobine (L1),
moyennant quoi, lors de la détection de la démagnétisation de la bobine (L1), le premier interrupteur (S1) est refermé et
**caractérisé en ce que**
l'unité de commande
d1) ouvre le premier interrupteur (S1) lors du dépassement d'un deuxième courant de référence (Ref2) défini à travers le premier interrupteur (S1) pendant le temps d'activation du premier interrupteur (S1) et
d2) désactive ensuite, pendant un temps de pause prédéfini, la détection de la démagnétisation de la bobine (L1).

5. Procédé selon la revendication 4,
**caractérisé en ce que**
l'unité de commande (SR) désactive temporairement le circuit d'exploitation lors d'un dépassement répété du deuxième courant de référence (Ref2) défini à travers le premier interrupteur (S1) pendant le temps d'activation.
